# EUROPÄISCHE PATENTSCHRIFT

(11) **EP 4 115 964 B1**
(45) Veröffentlichungstag und Bekanntmachung des Hinweises auf die Patenterteilung: **14.02.2024**
(21) Anmeldenummer: 22181375.1
(22) Anmeldetag: 27.06.2022
(51) Int. Cl.: B01D 29/23, B01D 29/54, B01D 36/02

(54) **FILTERVORRICHTUNG**
FILTER DEVICE
DISPOSITIF FILTRE

(30) Priorität: 06.07.2021 DE 102021003480
(43) Veröffentlichungstag der Anmeldung: 11.01.2023
(73) Patentinhaber: RT-Filtertechnik GmbH, 88048 Friedrichshafen (DE)
(72) Erfinder: van Uffelen, Florentin, 88085 Langenargen (DE); Zellhausen, Benedikt, 88662 Überlingen (DE)
(74) Vertreter: Bartels und Partner, Patentanwälte

(56) Entgegenhaltungen:
- EP-A1- 2 946 824
- DE-A1- 19 955 635
- DE-A1-102006 036 231
- US-A- 5 766 468
- US-A1- 2008 179 263

## Beschreibung

Die Erfindung betrifft eine Filtervorrichtung mit den Merkmalen im Oberbegriff von Anspruch 1.

Durch DE 100 01 259 A1 ist eine Filtervorrichtung mit einem Filtergehäuse bekannt, in dem mindestens zwei Filterelemente mit voneinander verschiedenen Filterfeinheiten der Filtermaterialien angeordnet sind, die über jeweils eine Trennvorrichtung teilweise voneinander getrennt sind, die eine Durchlassstelle vorgebbaren Querschnitts aufweist für eine fluidführende Verbindung zwischen benachbarten Unfiltraträumen, die in Fluidströmungsrichtung des abzureinigenden Fluids gesehen, vor den Filtermaterialien angeordnet sind. Mit der bekannten Filtervorrichtung ist eine Kombination eines sogenannten Haupt- und eines sogenannten Nebenstromfilters in einem gemeinsamen Filtergehäuse erreicht, wobei im Hinblick auf die unterschiedlichen Filterfeinheiten der eingesetzten Filtermaterialien das Filterelement mit der gröberen Filterfeinheit als Hauptstromfilter dient und derart den größten Teil des abzureinigenden Volumenstroms übernimmt, wohingegen das Filterelement mit der feineren Filterfeinheit eine demgegenüber kleineren Volumenstrom abreinigt. Über die angesprochene Durchlassstelle mit vorgebbarem Querschnitt innerhalb der Trennvorrichtung lässt sich darüber hinaus sehr exakt eine Volumenstromaufteilung für die Haupt- und Nebenstromfiltration erreichen, was die Qualität der Filtration für das abzureinigende Fluid erhöht. Charakteristisch für die bekannte Lösung ist, dass jedenfalls beide Filterelemente über einen gemeinsamen Zulauf mit Unfiltrat versorgt sind und dass das mittels den Filterelementen abgereinigte Fluid als Filtrat über einen gemeinsamen Ablauf aus dem ansonsten geschlossen ausgebildeten Filtergehäuse zur weiteren Verwendung abgeführt wird.

Die DE 199 55 635 A1 beschreibt eine Filtervorrichtung mit einem Filtergehäuse, in dem mindestens zwei Filterelemente jeweils zwischen einem Unfiltratraum und einem Filtratraum angeordnet sind, wobei die Unfiltraträume fluidisch voneinander getrennt sind und jeder Unfiltratraum einen eigenen Zulauf für Unfiltrat aufweist, der von dem Zulauf des jeweils anderen Unfiltratraums fluidisch getrennt ist.

Weitere Filtervorrichtungen gehen aus der DE 10 2006 036 231 A1, der EP 2 946 824 A1, der US 5 766 468, der US 2008/0179263 A1 hervor.

Ausgehend von diesem Stand der Technik liegt der Erfindung die Aufgabe zugrunde, unter Beibehalten der Vorteile der bekannten Filtervorrichtung eine demgegenüber verbesserte Lösung zu schaffen mit vermehrten Einsatzmögl ichkeiten.

Eine dahingehende Aufgabe löst eine Filtervorrichtung mit den Merkmalen des Patentanspruches 1 in seiner Gesamtheit.

Gemäß dem Kennzeichen von Anspruch 1 ist vorgesehen, dass das Filtergehäuse aus einer Art Abströmrohr gebildet ist mit Durchlassstellen, die der Strömungsführung des gefilterten Fluids dienen und durch welche eine fluidführende Verbindung zwischen dem Filtratraum und einem Inneren eines Tanks herstellbar ist, in den die Filtervorrichtung aufnehmbar ist.

Im Hydrauliköl kann grundsätzlich Luft, auch in feindispergierter Form, mitgeführt sein und die Luft scheidet sich an den genannten Durchlassstellen aus dem Fluid ab unter Bildung größerer Blasen, die ab einer gewissen Auftriebsgröße aus dem Fluid nach oben hin in einen Tank austreten. Dergestalt ist ein Entgasen des Betriebsfluids in Form des Hauptöls und gleichzeitig des Lecköls möglich.

Dadurch, dass die Unfiltraträume fluidisch voneinander getrennt sind und jeder Unfiltratraum einen eigenen Zulauf für Unfiltrat aufweist, der von dem Zulauf des jeweils anderen Unfiltratraums fluidisch getrennt ist, ist ein Filterelementverbund mit zwei Filterelementen in einem Filtergehäuse geschaffen, das zwei voneinander getrennte Unfiltraträume aufweist, von denen jeweils ein Unfiltratstrom ausgehend, von dem zugehörigen Filterelement von Partikelverschmutzung abgereinigt, in einen gemeinsamen Filtratraum eintritt. Die beiden Filterelemente können als eigenständige Bauteile benachbart zueinander angeordnet und beispielsweise mittels einer Endkappe voneinander separiert miteinander verbunden sein; es besteht aber auch die Möglichkeit, mittels einer Clipverbindung diese lösbar aneinanderzulegen oder über eine Schweiß- oder Klebstoffverbindung diese direkt an ihren einander benachbarten Enden miteinander fest zu verbinden.

Dergestalt ist eine Möglichkeit geschaffen, sowohl einen von einer hydraulischen Einheit, wie beispielsweise einer hydraulischen Pumpe, stammenden Hauptölstrom abzureinigen einschließlich eines zusätzlichen Leckölstromes, der gleichfalls von dieser hydraulischen Einheit stammt und der in Verbindung mit dem Fördern oder Ansteuern des Hauptvolumenstromes im Betrieb der Einheit respektive der Pumpe zwangsläufig mit entsteht. Durch die Aufteilung des Filterelementverbundes innerhalb der Filtervorrichtung in zwei Behandlungsbereiche für voneinander getrennt geführte Fluidströme, lässt sich mit dem einen Behandlungsbereich der Hauptölstrom als Hauptstrom filtrieren und mit dem anderen Behandlungsbereich der Leckölstrom als eigentlicher Nebenstrom.

Bei einer bevorzugten Ausführungsform der erfindungsgemäßen Filtervorrichtung ist vorgesehen, dass der jeweilige Zulauf in einem gemeinsamen Gehäuseteil des Filtergehäuses angeordnet ist, und dass der jeweilige Zulauf mindestens eine Anschlussstelle im Gehäuseteil aufweist. Insbesondere für die Zufuhr des Hauptölstromes weist im Hinblick auf die damit verbundene große Fluidmenge der zuordenbare Zulauf mehrere Anschlussstellen im Gehäuseteil auf, die mit der hydraulischen Einheit über übliche Fluidleitungen in Verbindung stehen. Über die voneinander getrennten Zuflüsse nebst ihrer getrennten Fluidführung im Gehäuseteil ist dergestalt auch eine wärmetechnische Entkopplung von Haupt- und Nebenstrom erreicht, so dass es zu einer vergleichmäßigten Wärmeeinleitung in das sonstige Gehäuse kommt.

Bei einer weiteren bevorzugten Ausführungsform der erfindungsgemäßen Filtervorrichtung ist vorgesehen, dass die beiden Filterelemente koaxial hintereinander angeordnet von innen nach außen durchströmt einen gemeinsamen Filtratraum aufweisen. Die insoweit einen Filterelementverbund bildenden beiden Filterelemente lassen sich dergestalt platzsparend im Filtergehäuse unterbringen, wobei das Filterelement für den Hauptstrom mit der größeren Fluidmenge deutlich größer, insbesondere länger, konzipiert sein kann als das Filterelement für den Lecköl- oder Nebenstrom. Über den gemeinsamen Filtratraum gelangt das Filtrat strömungstechnisch günstig aus dem genannten Filterelementverbund in einen Vorratstank.

Bei einer weiteren bevorzugten Ausführungsform der erfindungsgemäßen Filtervorrichtung ist vorgesehen, dass der Unfiltratraum des einen Filterelementes zwischen einer geschlossenen Mantelfläche und einem Filtermaterial dieses Filterelementes verläuft, der bodenseitig an einen Zulauf für einen Leckölstrom angeschlossen ist, der mit seiner axialen Anschlussstelle in einen Aufnahmeraum im Gehäuseteil ausmündet, der von einem weiteren Aufnahmeraum im Gehäuseteil abgetrennt ist, in das der Zulauf für einen Hauptölstrom einmündet. Die Filtervorrichtung wird insbesondere als sogenannte In-Tank-Lösung eingesetzt mit vertikaler Betriebsstellung, so dass sich die Angabe bodenseitig auf den unteren Fluidbereich der Filtervorrichtung bezieht. Aufgrund der konzentrischen Anordnung zwischen geschlossener Mantelfläche und hohlzylindrischem Filtermaterial entsteht ein gleichförmiger Ringraum als Unfiltratraum, der von der Bodenseite her befüllt, eine gleichmäßige Fluidverteilung im zuordenbaren Unfiltratraum erlaubt mit gleichmäßiger Durchströmung des genannten Filterelementes von innen nach außen.

Bei einer weiteren bevorzugten Ausführungsform der erfindungsgemäßen Filtervorrichtung ist vorgesehen, dass der Zulauf für den Hauptölstrom eine bodenseitige Anschlussstelle im Gehäuseteil aufweist, die koaxial zu den Filterelementen angeordnet ist, und dass mindestens eine weitere Anschlussstelle für den Hauptölstrom vorhanden ist, die wie die Anschlussstelle für den Leckölstrom radial das Gehäuseteil durchgreift. Durch die Anordnung der Anschlussstellen sowohl in axialer Richtung als auch in quer dazu verlaufender Radialrichtung im Gehäuseteil lässt sich in bauraumsparender Weise eine Vielzahl von Zuflussmöglichkeiten für den jeweiligen Unfiltratstrom erreichen, sowohl bezogen auf den Hauptstrom als auch auf den Nebenstrom. Das in Fluidströmungsrichtung des Unfiltratstromes für das Hauptfilterelement aufsteuernde Tellerventil verhindert bei Außerbetriebnahme ein ungewolltes Rückströmen des Unfiltrats vom Innern dieses Filterelementes auf die Zulaufseite.

Besonders bevorzugt ist vorgesehen, dass die beiden Filterelemente, insbesondere nach deren Verbrauch, nach Entfernen eines Deckelteils vom Filtergehäuse aus diesem im Rahmen eines Elementverbundes entnehmbar und gegen Neu-Filterelemente tauschbar sind. Dergestalt lässt sich zeitnah und auf einfache Weise mit geringen Betätigungskräften ein Elementwechsel vornehmen.

Bei einer weiteren bevorzugten Ausführungsform der erfindungsgemäßen Filtervorrichtung ist vorgesehen, dass das Filtermaterial des jeweiligen Filterelementes von einem fluiddurchlässigen Stützrohr umgeben ist und stirnseitig von mindestens einer Endkappe eingefasst ist. Dergestalt kann sich das plissierte, mehrlagige Filtermaterial am Stützrohr abstützen, um die Filterfunktion zu gewährleisten. Zwischen dem jeweiligen Stützrohr und dem rohrförmigen Filtergehäuse besteht ein vorgebbarer radialer Abstand, der den Filtratraum ausbildet, indem das jeweils abgereinigte Unfiltrat aus dem Elementverbund abgeführt werden kann. In diesem Filtratraum kommt es zu einer Vergleichmäßigung der Filtratströmung nebst deren Beruhigung mit der Möglichkeit der Gasblasenabscheidung aus dem Betriebsfluid.

Bei einer weiteren bevorzugten Ausführungsform der erfindungsgemäßen Filtervorrichtung ist vorgesehen, dass die bodenseitige Endkappe des einen Filterelementes für den Hauptölstrom in mindestens einer Ebene mindestens ein einzelnes Dichtmittel aufweist zwecks Abdichten des Elementverbundes gegenüber dem Gehäuseteil bei gleichzeitigem Trennen des jeweiligen Unfiltratraums vom Filtratraum. Dergestalt wird der Elementverbund bei einem Austausch gegen Neu-Filterelemente zusammen mit den Dichtmitteln aus dem Filtergehäuse händisch entfernt, was einem vereinfachten Austausch zugutekommt.

Bei einer weiteren bevorzugten Ausführungsform der erfindungsgemäßen Filtervorrichtung ist vorgesehen, dass das Deckelteil ein Bypassventil und/ oder eine Magneteinrichtung, insbesondere in Form eines stabförmigen Permanentmagneten, aufweist. Ist insbesondere der Hauptölfilter von Partikelverschmutzung zugesetzt, erlaubt das Bypassventil unter Umgehung des verschmutzten Filterelementes eine Abfuhr des Filtratstroms in Richtung der Filtratseite der Vorrichtung. Mittels der Magneteinrichtung lassen sich etwaige metallische Partikel aus dem Unfiltratstrom absondern, die sich dann an der Magneteinrichtung respektive an dem stabförmigen Permanentmagneten ablagern.

Die Erfindung betrifft des Weiteren eine Filtervorrichtung mit einem Filterelementverbund bestehend aus zwei Filterelementen, die über eine gemeinsame Endkappe miteinander verbunden sind, wobei sich ein Filtermaterial des einen Filterelementes unter Bildung eines Aufnahmeraumes um einen geschlossenen Mantel erstreckt und wobei dieser Aufnahmeraum über Durchlassstellen in einer weiteren Endkappe des einen Filterelementes in die Umgebung ausmündet. Dergestalt bilden die Durchlassstellen eine Zulaufmöglichkeit für Unfiltrat in den einen Aufnahmeraum als Unfiltratraum und die geschlossene Mantelfläche erlaubt eine gezielte Fluidführung aus diesem Unfiltratraum in Richtung der Filtratseite der Vorrichtung.

Bei einer weiteren besonders bevorzugten Ausführungsform ist vorgesehen, dass in einem bodenseitigen Bereich des Filterelementes mit dem geschlossenen Mantel zwei voneinander verschiedene Dichtmittel mit außenumfangsseitiger Dichtwirkung derart angeordnet sind, dass die zugehörigen Dichtringe zueinander konzentrisch verlaufen. Soweit dieser Filterelementverbund gegen Neuelemente getauscht wird, werden auch die zugehörigen Dichtmittel mit ausgetauscht und die Dichtmittel bilden insoweit eine Führung aus für das gezielte Einsetzen des Filterelementverbundes in den unteren Bodenbereich durch Einschieben in das sich anschließende Gehäuseteil, das im Wesentlichen unterhalb einer Bodentankwand des Fluidtanks angeordnet ist.

Im Folgenden wird die erfindungsgemäße Filtervorrichtung nebst Filterelementverbund anhand von Ausführungsformen nach der Zeichnung näher erläutert. Dabei zeigen in prinzipieller und nicht maßstäblicher Darstellung die
- Fig. 1: in perspektivischer Ansicht die wesentlichen Teile der Filter-vorrichtung als Ganzes;
- Fig. 2: eine der Fig. 1 entsprechende Darstellung im Teillängsschnitt;
- Fig. 3: in der Art eines Längsschnittes den unteren Bereich der Filtervorrichtung nach den Fig. 1 und 2;
- Fig. 4: eine Unteransicht auf die Vorrichtungsteile nach der Fig. 3;
- Fig. 5 und 6: im teilgeschnittenen Zustand bzw. in Ansicht einen Filterelementverbund, wie er bei der Lösung nach den Fig. 1 bis 4 Verwendung findet; und
- Fig. 7: eine der Fig. 3 entsprechende Darstellung einer geänderten Ausführungsform.

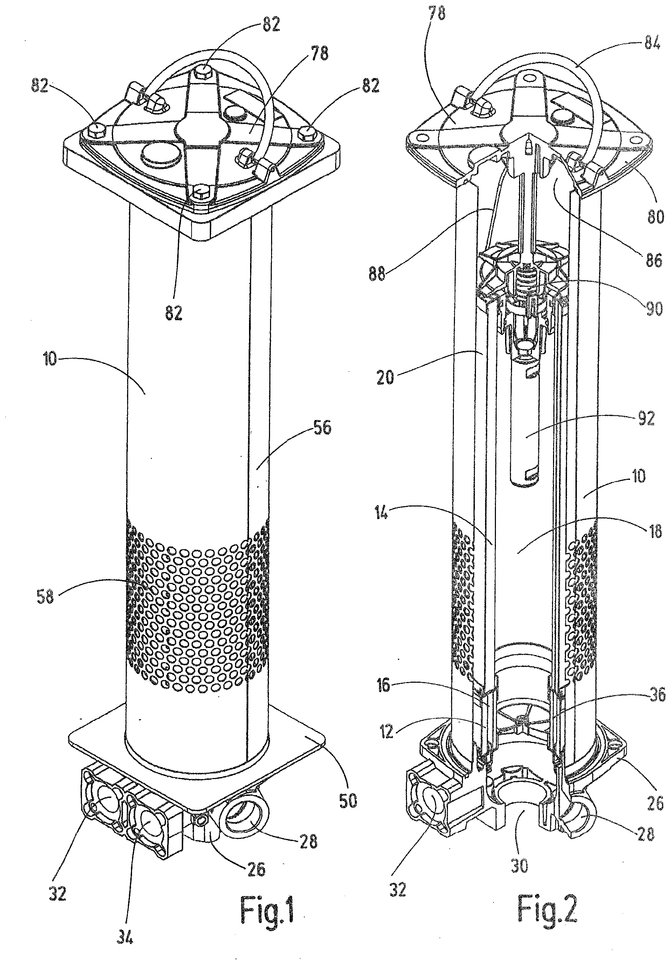

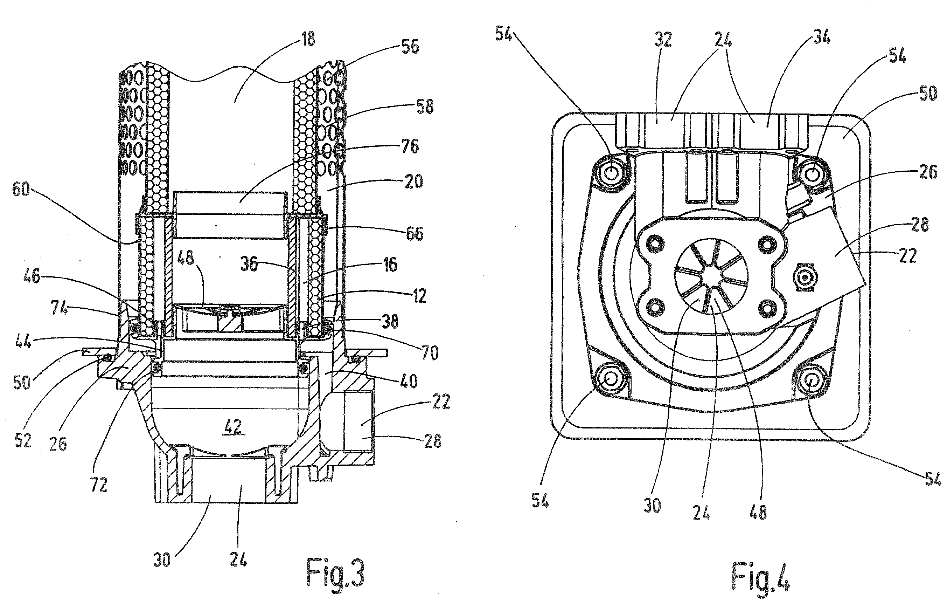

In den Fig. 1 und 2 ist die Filtervorrichtung als Ganzes dargestellt. Die Filtervorrichtung weist ein Filtergehäuse 10 auf, indem zwei Filterelemente 12, 14 jeweils zwischen einem Unfiltratraum 16, 18 und einem gemeinsamen Filtratraum 20 angeordnet sind. Wie insbesondere die Fig. 2 und 3 zeigen, sind die beiden Unfiltraträume 16, 18 fluidisch voneinander getrennt, wobei jeder Unfiltratraum 16, 18 einen eigenen Zulauf 22, 24 für Unfiltrat aufweist, der von dem Zulauf 24, 22 des jeweils anderen Unfitlratraums 18, 16 fluidisch getrennt ist.

Der jeweilige Zulauf 22, 24 ist in einem gemeinsamen Gehäuseteil 26 des Filtergehäuses 10 angeordnet, wobei der jeweilige Zulauf 22, 24 zugeordnete Anschlussstellen 28, 30, 32, 34 im Gehäuseteil 26 aufweist. Die beiden Filterelemente 12, 14 sind koaxial hintereinander angeordnet und werden von dem jeweiligen Unfiltratstrom von innen nach außen durchströmt, wobei das derart abgereinigte Unfiltrat als Filtrat in den gemeinsamen Filtratraum 20 ausströmt.

Wie sich insbesondere aus der Figur 3 ergibt, verläuft der Unfiltratraum 16 des einen Filterelementes 12 zwischen einer geschlossenen, ringförmigen Mantelfläche 36 und einem hohlzylindrischen Filtermaterial dieses einen Filterelementes 12. Der Unfiltratraum 16 ist bodenseitig an den Zulauf 22 für einen Leckölstrom einer hydraulischen Einheit, wie einer hydraulischen Pumpe (nicht dargestellt), angeschlossen, wobei der Unfiltratraum 16 über eine axiale Anschlussstelle 38 in einen zugehörigen Aufnahmeraum 40 im Gehäuseteil 26 ausmündet, der von einem weiteren Aufnahmeraum 42 im Gehäuseteil 26 abgetrennt ist, in das der Zulauf 24 für einen Hauptölstrom einmündet, der beispielsweise aus dem Förderstrom der hydraulischen Einheit in Form der Pumpe gebildet ist, die im Rahmen des Pump- oder Förderbetriebs intern den genannten Leckölstrom erzeugt.

Sowohl das Filtermaterial des Filterelementes 12 als auch die hohlzylindrische Mantelfläche 36 münden in Blickrichtung auf die Fig. 3 gesehen, in eine untere Endkappe 44 aus, die als axiale Anschlussstelle 38 mit einer Vielzahl durchgehender Durchbrechungen 46 versehen ist, die die fluidführende Verbindung zwischen dem Unfiltratraum 16 und dem Aufnahmeraum 40 mit dem Zulauf 22 für den Leckölstrom herstellen. Der Zulauf 24 für den Hauptölstrom weist eine bodenseitige Anschlussstelle 30 im Gehäuseteil 26 auf, die koaxial zu den Filterelementen 12, 14 angeordnet von einem Tellerventil 48 ansteuerbar ist, das in der Fig. 3 in seiner geschlossenen Position dargestellt ist und des Weiteren Bestandteil der unteren Endkappe 44 ist.

Neben der bodenseitigen, axialen Anschlussstelle 38 weist das untere Gehäuseteil 26 zwei weitere Anschlussstellen 32, 34 für den Hauptölstrom auf, die wie die Anschlussstelle 28 für den Leckölstrom radial das Gehäuseteil 26 durchgreifen. Sobald über den Zulauf 24 der Hauptölstrom mit vorgebbarem Druck in den weiteren Aufnahmeraum 42 im Gehäuseteil 26 einströmt, öffnet das Tellerventil 48, indem sein elastisch nachgiebiger Ventilteller vom Ventilsitz abhebt. Bei stillgesetzter Filtervorrichtung schließt das Tellerventil 48 und verhindert das ungewollte Rückströmen von Unfiltrat aus dem Unfiltratraum 18 in Richtung des weiteren Aufnahmeraumes 42.

Das Gehäuseteil 26 ist in der Art einer Halbschale ausgebildet und durchgreift in Blickrichtung auf die Fig. 3 gesehen, von unten her eine Tankwand 50 eines nicht näher dargestellten Fluid-Vorratstanks. Insoweit ist das Gehäuseteil 26 über eine O-Ringdichtung 52 gegenüber der Unterseite der Tankwand 50 abgedichtet. Wie des Weiteren die Fig. 4 zeigt, dienen vier Schraubverbindungen 54 dem Festlegen des Gehäuseteils 26 an der Tankwand 50. Des Weiteren ist das eigentliche Filtergehäuse 10 aus einer Art zylindrischem Abströmrohr 56 gebildet, das mit Durchlassstellen 58 in der Art einer Perforation versehen ist, wobei die Durchlassstellen 58 das Abströmrohr 56 durchgreifen und eine fluidführende Verbindung zwischen dem Filtratraum 20 und dem Inneren des nicht näher dargestellten Vorratstanks herstellen. Die Durchlassstellen 58 dienen dem Entgasen des gefilterten Fluids, soweit es sich im Filtratraum 20 befindet und die Perforation respektive die Durchlassstellen 58 erstrecken sich umfangsseitig im zylindrischen Abströmrohr 56 in einem Bereich oberhalb des einen Filterelementes 12 und unterhalb der Mitte des zweiten Filterelementes 14 in Blickrichtung auf die Fig. 1 bis 3 gesehen.

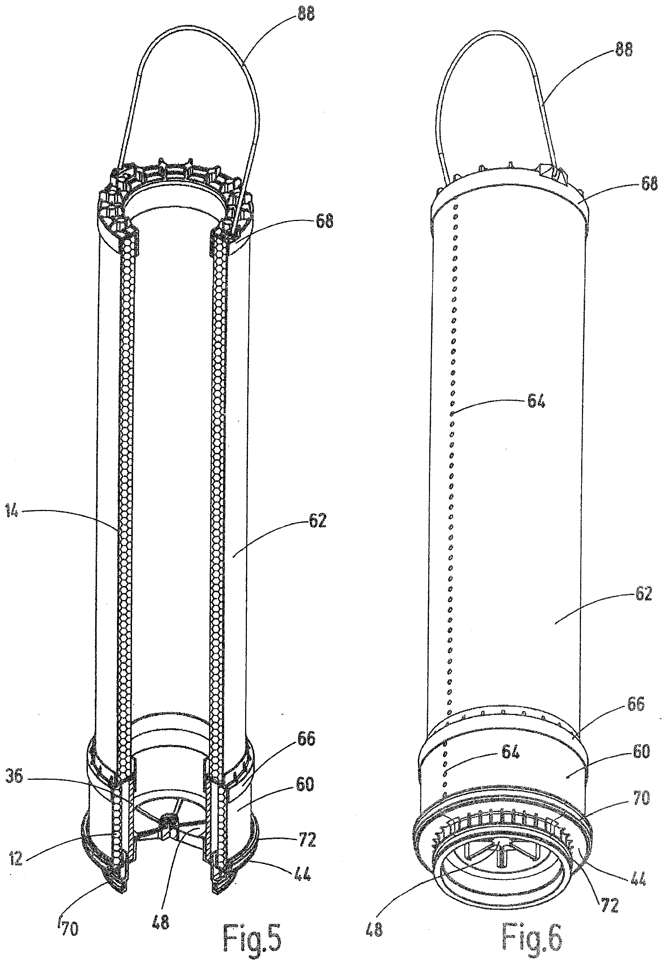

Wie sich insbesondere aus den Fig. 5 und 6 ergibt, ist das Filtermaterial des jeweiligen Filterelementes 12, 14 von einem fluiddurchlässigen Stützrohr 60, 62 umgeben, wobei in der Fig. 6 der einfacheren Darstellung wegen, nur ausschnittsweise die jeweilige Perforation 64 als Durchlassstellen für das jeweilige Stützrohr 60, 62 dargestellt ist. Ferner ist das jeweilige Elementmaterial des Filterelementes 12, 14 zwischen Endkappen 44, 46 und 48 aufgenommen, wobei die Filterelemente 12, 14 an ihren einander benachbarten Stirnseiten über eine gemeinsame Endkappe 66 verfügen, die außen und innen zylindrisch vorstehend verbreitert ist und zumindest teilweise das jeweils angrenzende Stützrohr 60, 62 außenumfangsseitig übergreift sowie innenumfangsseitig das benachbarte Elementmaterial des Filterelementes 14 nebst der Innenumfangsseite der zylindrischen Mantelfläche 36.

Die untere Endkappe 44 weist außenumfangsseitig ein erstes Dichtmittel 70 auf, das das Stützrohr 60 des Filterelementes 12 umfasst und insoweit den Elementverbund mit den Filterelementen 12, 14 gegenüber der Innenwand des Gehäuseteiles 26 in diesem Bereich abdichtet. Wie insbesondere die Fig. 3 zeigt, weist die untere Endkappe 44 des Weiteren eine nach unten vorstehende Auskragung auf, die mit einem weiteren ringförmigen Dichtmittel 72 versehen ist, das wiederum den weiteren Aufnahmeraum 42 nebst dem Unfiltratraum 18 bei geöffnetem Tellerventil 48 gegenüber dem Aufnahmeraum 40 für den Zulauf des Leckölstroms abdichtet. Insoweit sind das erste Dichtmittel 70 und das zweite Dichtmittel 72 konzentrisch zueinander angeordnet, wobei das erste Dichtmittel 70 einen größeren Außendurchmesser aufweist als das zweite Dichtmittel 72, das in einen im Durchmesser reduzierten Gehäuseabsatz des Gehäuseteils 26 in axialer Richtung eingreift.

Das Gehäuseteil 26 weist nach oben hin gesehen eine Anlagefläche 74 auf für die Anlage des unteren Endbereiches des Abströmrohres 56. Die mittlere Endkappe 66 begrenzt eine ringförmige Durchlassöffnung 76, die eine Fluidverbindung zwischen dem weiteren Aufnahmeraum 52 und dem Unfiltratraum 18 des Filterelementes 14 bei geöffnetem Tellerventil 48 ermöglicht. Wie sich insbesondere aus der Fig. 2 ergibt, weist die Filtervorrichtung ein Deckelteil 78 auf, das in einer flanschartigen Verbreiterung 80 aufgenommen ist, die mittels einer Schraubverbindung 82 an einer oberen, nicht näher dargestellten Tankwand des Fluid-Vorratstanks festgelegt ist.

Nach Lösen der Schraubverbindung 82 kann das Deckelteil 78 über einen zugeordneten schwenkbaren Handgriff 84 aus der flanschartigen Verbreiterung 80 herausgezogen werden. Damit ist eine Entnahmeöffnung 86 im oberen Bereich des Filtergehäuses 10 respektive des Abströmrohres 56 freigegeben und der Elementverbund, bestehend aus den beiden Filterelementen 12, 14, kann mittels eines Bügelgriffes 88 aus dem Abströmrohr 56 von Hand herausgezogen werden. Dabei kommen die beiden Dichtmittel 70, 72 am unteren Ende des Elementverbundes außer Eingriff mit den benachbarten Gehäusewandteilen des insoweit am Tank verbleibenden Gehäuseteils 26. Eine dahingehende Entnahme des Elementverbundes findet insbesondere dann statt, wenn die Filterelemente 12, 14 wegen Partikelverschmutzung verbraucht sind und gegen Neuelemente getauscht werden müssen. Der Einsatzvorgang findet dann in umgekehrter Reihenfolge statt und die beiden Dichtmittel 70, 72 kommen in ihrer konzentrischen Anordnung wieder in Anlage mit dem am Tank verbleibenden Gehäuseteil 26. Nach Aufsetzen des Deckelteils 78 und erneutem Herstellen der Schraubverbindung 82, steht dann die Filtervorrichtung im Rahmen einer sogenannten In-Tank-Lösung für erneute Filtrationsvorgänge für einen Hauptöl- und einen Leckölstrom einer angeschlossenen hydraulischen Einheit, wie einer Pumpe, zur Verfügung.

Wie sich des Weiteren aus der Fig. 2 ergibt, ist an der Unterseite des Deckelteils 78 über eine stegartige Verlängerung noch ein Bypassventil 90 in Eingriff mit dem Elementverbund, dessen Ventilteller federbelastet in einer Schließstellung gehalten bei verblocktem Filterelement 14 öffnet und eine Fluidverbindung zwischen dem Unfiltratraum 18 und dem Filtratraum 20 auf der Innenseite des Abströmrohres 56 herstellt. Neben dem Bypassventil 90 ist an der stabartigen Verlängerung des Deckelteiles 78 noch eine Magneteinrichtung, in Form eines stabförmigen Permanentmagneten 92 angeordnet, der in der Lage ist, Metallpartikel aus dem Fluidstrom zusätzlich abzureinigen, bevor diese an das Filterelement 14 gelangen können.

Mit der erfindungsgemäßen Filtervorrichtungslösung ist ein Filterkonzept realisiert mit der Möglichkeit des Abreinigens eines Hauptstromes und dem Abreinigen eines Leckölstroms, wobei beide Fluidströme von ein und derselben hydraulischen Einheit stammen können oder eben auch von verschiedenen Einheiten. Da die Leckölmenge geringer ist als die Hauptstrommenge kann das Leckölfilterelement 12 entsprechend kleiner konzipiert sein als das Hauptstromfilterelement 14. Des Weiteren kommt dem unteren Gehäuseteil 26 des Filtergehäuses 10 die Aufgabe eines Art Sammlers zu, in den alle Anschlussstellen 28, 30, 32, 34 für den jeweiligen Zulauf 22, 24 an zentraler Stelle einmünden. Dies vereinfacht die Fluidstromführung im Betrieb der Filtervorrichtung deutlich. Des Weiteren lassen sich mit der erfindungsgemäßen Filtervorrichtung auch andere Filtrationsaufgaben lösen, die einer Hauptölstrom- und einer Nebenölstromfiltration bedürfen. Neben der Filtration von Öl können auch andere Fluide behandelt werden.

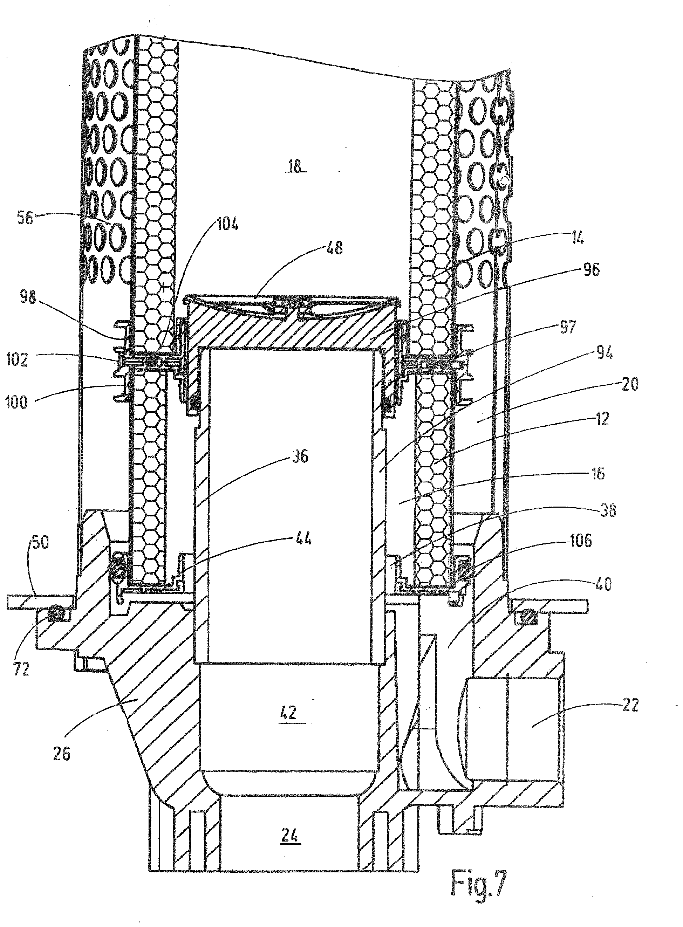

Im Folgenden wird die geänderte Ausführungsform nach der Fig. 7 insofern erläutert, als sie sich wesentlich von der Ausführungsform nach der Fig. 3 unterscheidet. Dabei werden insbesondere dieselben Bauteile wie bisher angesprochen auch mit denselben Bezugszeichen versehen, so dass insofern die bisher hierzu getroffenen Ausführungen auch für die geänderte Ausführungsform nach der Fig. 7 gelten. Konzentrisch zu den Filterelementen 12, 14 verlaufend, ist auf der Innenseite eine rohrförmige Strömungsführung 94 eingepasst, die mit ihrem einen freien oberen Ende in einer Aufnahme 96 für das Tellerventil 48 endet und mit ihrem anderen unteren Ende in eine absatzartige Vertiefung im Gehäuseunterteil 26 aufgenommen ist. Zur Reduzierung von Strömungswiderständen sowie zur Kostenreduzierung, kann auch das Tellerventil 48 weggelassen werden, so dass dann eine direkte Durchströmung von der Innenseite des Rohres 94 auf die Innenseite des Filterelementes 14 erfolgt. Des Weiteren übergreift die Aufnahme 96, die von nicht näher dargestellten Fluiddurchlässen durchgriffen ist, die von dem Tellerventil 48 abgedeckt werden mit einem äußeren Umfassungsrand den freien Rand der Einsatzhülse 94.

Ferner münden die beiden Außenumfangsflächen der Filterelemente 12 und 14 in eine gemeinsame vertikale Umfangsfläche aus und nur das untere Filterelement 12 ist auf seiner Innenumfangsseite gegenüber dem oberen Filterelement 14 zurückversetzt zwecks Vergrößern des Volumens des ersten Unfiltratraums 16. Insoweit bildet das Rohr 94 die Mantelfläche 36 nach der Ausführungsform gemäß Fig. 3 aus. Auch ist, wie bei dem Ausführungsbeispiel nach der Fig. 3, mindestens eine axiale Anschlussstelle 38 vorgesehen, die im vorliegenden Fall als zylindrische Rundausnehmung gebildet ist und das Rohr 94 mit einem radialen Abstand umfasst. Über die dahingehende ringförmige Anschlussstelle 38 ist der erste Unfiltratraum 16 mit dem ersten Aufnahmeraum 40 und mithin mit dem ersten Zulauf 22 fluidführend verbunden. Das Rohr 94 ist demgegenüber in konzentrischer Anordnung in fluidführender Verbindung mit dem zweiten Zulauf 24, der insoweit in den zweiten Aufnahmeraum 42 ausmündet.

Die mittlere Kappe 66 ist gemäß dem Ausführungsbeispiel nach der Fig. 7 aus zwei Teilen 98, 100 gebildet, die spiegelseitig verkehrt entlang ihres Außenumfanges miteinander über eine Rastverbindung 102 mit Rastnase und Rastausnehmung lösbar miteinander verclipbar sind und zu Zwecken der Abdichtung mittig einen O-förmigen Dichtring 104 aufnehmen, der in einer gemeinsamen einzelnen Dichtebene die Abdichtung vornimmt. Zur Innenumfangsseite sind die beiden Teile 98, 100 mit einer entsprechend geeigneten Aufnahme für die Aufnahme 96 des Tellerventiles 48 ausgestattet. Das ringförmige Endkappenteil 98 ist gleichfalls für die untere Endkappe 44 verwendet, die innenumfangsseitig die axiale Anschlussstelle 38 ausbildet und außenumfangsseitig eine nutförmige Aufnahme für eine weitere Ringdichtung 106 aufweist, die im Zusammenwirken mit dem unteren Gehäuseunterteil 26 die Abdichtung zwischen dem Filtratraum 20 und dem ersten Aufnahmeraum 40 des Zulaufes 22 herstellt, vergleichbar der Dichtung 70 im Ausführungsbeispiel nach der Fig. 3. Im Betrieb der geänderten Ausführungsform nach der Fig. 7 lassen sich dieselben Vorteile erzielen wie vorstehend beschrieben; allein die dahingehende Ausführungsform lässt sich im Bedarfsfall kostengünstiger realisieren mit weniger Komponenten unter Einsatz von Gleichbauteilen, insbesondere betreffend die Endkappen 44 und 66.

## Patentansprüche

1. Filtervorrichtung mit einem Filtergehäuse (10), in dem mindestens zwei Filterelemente (12, 14) jeweils zwischen einem Unfiltratraum (16, 18) und einem Filtratraum (20) angeordnet sind, wobei die Unfiltraträume (16, 18) fluidisch voneinander getrennt sind und jeder Unfiltratraum (16, 18) einen eigenen Zulauf (22, 24) für Unfiltrat aufweist, der von dem Zulauf (22, 24) des jeweils anderen Unfiltratraums (16, 18) fluidisch getrennt ist, **dadurch gekennzeichnet, dass** das Filtergehäuse (10) aus einer Art Abströmrohr (56) gebildet ist mit Durchlassstellen (58), die der Strömungsführung des gefilterten Fluids dienen und durch welche eine fluidführende Verbindung zwischen dem Filtratraum (20) und einem Inneren eines Tanks herstellbar ist, in den die Filtervorrichtung aufnehmbar ist.

2. Filtervorrichtung nach Anspruch 1, **dadurch gekennzeichnet, dass** der jeweilige Zulauf (22, 24) in einem gemeinsamen Gehäuseteil (26) des Filtergehäuses (10) angeordnet ist, und dass der jeweilige Zulauf (22, 24) mindestens eine Anschlussstelle (28, 30, 32, 34) im Gehäuseteil (26) aufweist.

3. Filtervorrichtung nach Anspruch 1 oder 2, **dadurch gekennzeichnet, dass** die beiden Filterelemente (12, 14) koaxial hintereinander angeordnet von innen nach außen durchströmt einen gemeinsamen Filtratraum (20) aufweisen.

4. Filtervorrichtung nach Anspruch 2 oder 3, **dadurch gekennzeichnet, dass** der Unfiltratraum (16) des einen Filterelementes (12) zwischen einer geschlossenen Mantelfläche (36) und einem Filtermaterial dieses Filterelementes (12) verläuft, der bodenseitig an einen Zulauf (22) für einen Leckölstrom angeschlossen ist, der mit seiner axialen Anschlussstelle (38) in einen Aufnahmeraum (40) im Gehäuseteil (26) ausmündet, der von einem weiteren Aufnahmeraum (42) im Gehäuseteil (26) abgetrennt ist, in das der Zulauf (24) für einen Hauptölstrom einmündet.

5. Filtervorrichtung nach einem der Ansprüche 2 bis 4, **dadurch gekennzeichnet, dass** der Zulauf (24) für den Hauptölstrom eine bodenseitige Anschlussstelle (30) im Gehäuseteil (26) aufweist, die koaxial zu den Filterelementen (12, 14) angeordnet ist, und dass mindestens eine weitere Anschlussstelle (32, 34) für den Hauptölstrom vorhanden ist, die wie die Anschlussstelle (28) für den Leckölstrom radial das Gehäuseteil (26) durchgreift.

6. Filtervorrichtung nach einem der vorstehenden Ansprüche, **dadurch gekennzeichnet, dass** die beiden Filterelemente (12, 14), insbesondere nach deren Verbrauch, nach Entfernen eines Deckelteils (78) vom Filtergehäuse (10) aus diesem im Elementverbund entnehmbar und gegen Neu-Filterelemente tauschbar sind.

7. Filtervorrichtung nach einem der vorstehenden Ansprüche, **dadurch gekennzeichnet, dass** das Filtermaterial des jeweiligen Filterelementes (12, 14) von einem fluiddurchlässigen Stützrohr (60, 62) umgeben ist und stirnseitig von mindestens einer Endkappe (44, 66, 68) eingefasst ist.

8. Filtervorrichtung nach Anspruch 7, **dadurch gekennzeichnet, dass** die bodenseitige Endkappe (44) des einen Filterelementes (12) für den Hauptölstrom in mindestens einer Ebene mindestens ein einzelnes Dichtmittel (70, 72) aufweist zwecks Abdichten des Elementverbundes gegenüber dem Gehäuseteil (26) bei gleichzeitigem Trennen des jeweiligen Unfiltratraums (16, 18) vom Filtratraum (20).

9. Filtervorrichtung nach einem der Ansprüche 6 bis 8, **dadurch gekennzeichnet, dass** das Deckelteil (78) ein Bypassventil (90) und/ oder eine Magneteinrichtung, insbesondere in Form eines stabförmigen Permanentmagneten (92), aufweist.

10. Filtervorrichtung nach einem der vorstehenden Ansprüche mit einem Filterelementverbund bestehend aus zwei Filterelementen (12, 14), die über eine gemeinsame Endkappe (66) miteinander verbunden sind, **dadurch gekennzeichnet, dass** sich ein Filtermaterial des einen Filterelementes (12) unter Bildung eines Aufnahmeraumes (40) um einen geschlossenen Mantel (36) erstreckt und dass dieser Aufnahmeraum (40) über Durchlassstellen (38) in einer weiteren Endkappe (44) des einen Filterelementes (12) verfügt.

11. Filtervorrichtung nach Anspruch 10, **dadurch gekennzeichnet, dass** in einem bodenseitigen Bereich des Filterelementes (12) mit dem geschlossenen Mantel (36) zwei voneinander verschiedene Dichtmittel (70, 72) mit einer Dichtwirkung derart angeordnet sind, dass die zugehörigen Dichtringe zueinander konzentrisch verlaufen.

## Claims

1. Filter device with a filter housing (10), in which at least two filter elements (12, 14) are arranged between an unfiltered medium chamber (16, 18) and a filtrate chamber (20) in each case, the unfiltered medium chambers (16, 18) being fluidically separated from one another and each unfiltered medium chamber (16, 18) having its own inlet (22, 24) for unfiltered medium, which is fluidically separate from the inlet (22, 24) to the respective other unfiltered medium chamber (16, 18), **characterised in that** the filter housing (10) is formed by a kind of discharge pipe (56) with passage points (58), which serve to guide the flow of filtered fluid and by means of which a fluid-conveying connection can be established between the filtrate chamber (20) and an interior of a tank, in which the filter device can be received.

2. Filter device according to claim 1, **characterised in that** the respective inlet (22, 24) is arranged in a common housing part (26) of the filter housing (10), and **in that** the respective inlet (22, 24) comprises at least one connection point (28, 30, 32, 34) in the housing part (26).

3. Filter device according to either claim 1 or claim 2, **characterised in that** the two filter elements (12, 14), arranged coaxially behind one another, with the throughflow passing from the inside to the outside, comprise a common filtrate chamber (20).

4. Filter device according to either claim 2 or claim 3, **characterised in that** the unfiltered medium chamber (16) of one filter element (12) runs between a closed jacket surface (36) and a filter material of this filter element (12), which is connected at its bottom side to an inlet (22) for a leakage oil flow, which, with its axial connection point (38), emerges into a receiving chamber (40) in the housing part (26), which is separate from a further receiving chamber (42) in the housing part (26), into which the inlet (24) for a main oil flow discharges.

5. Filter device according to any of claims 2 to 4, **characterised in that** the inlet (24) for the main oil flow has a bottom connection point (30) in the housing part (26), which is arranged coaxially with respect to the filter elements (12, 14), and **in that** at least one further connection point (32, 34) is provided for the main oil flow, which, like the connection point (28) for the leakage oil flow, passes radially through the housing part (26).

6. Filter device according to any of the preceding claims, **characterised in that** the two filter elements (12, 14), particularly after they have been used, can be taken out of the filter housing (10) in the composite element after removing a lid part (78) of said filter housing (10), and replaced with new filter elements.

7. Filter device according to any of the preceding claims, **characterised in that** the filter material of the respective filter element (12, 14) is surrounded by a fluid-permeable supporting tube (60, 62) and is bordered at its ends by at least one end cap (44, 66, 68).

8. Filter device according to claim 7, **characterised in that** the bottom end cap (44) of the one filter element (12) for the main oil flow comprises at least one individual sealing means (70, 72) in at least one plane for the purpose of sealing the composite element from the housing part (26) while simultaneously separating the respective unfiltered medium chamber (16, 18) from the filtrate chamber (20).

9. Filter device according to any of claims 6 to 8, **characterised in that** the lid part (78) comprises a bypass valve (90) and/or a magnet apparatus, particularly in the form of a rod-shaped permanent magnet (92).

10. Filter device according to any of the preceding claims with a composite filter element consisting of two filter elements (12, 14), which are connected to one another via a common end cap (66), **characterised in that** a filter material of one filter element (12) extends around a closed jacket (36), forming a receiving chamber (40), and **in that** this receiving chamber (40) has passage points (38) in a further end cap (44) of said one filter element (12).

11. Filter device according to claim 10, **characterised in that** two different sealing means (70, 72) with a sealing action are arranged in a bottom region of the filter element (12) with the closed jacket (36) such that the associated sealing rings run concentrically with respect to one another.

## Revendications

1. Dispositif de filtration comprenant une enveloppe (10) de filtre dans laquelle sont disposés au moins deux éléments (12, 14) de filtre, chacun entre un espace (16, 18) de non filtrat et un espace (20) de filtrat, dans lequel les espaces (16, 18) de non filtrat sont séparés fluidiquement les uns des autres et chaque espace (16, 18) de non filtrat a sa propre entrée (22, 24) pour du non filtrat, qui est séparée fluidiquement de l'entrée (22, 24) de l'autre espace (16, 18) respectif de non filtrat, **caractérisé en ce que** l'enveloppe (10) de filtre est formée d'une sorte de tube (56) d'écoulement ayant des endroits (58) de passage, qui servent à conduire l'écoulement du fluide filtré et par lesquels peut être ménagé une liaison fluidique entre l'espace (20) du filtrat et l'intérieur d'un réservoir, dans lequel le dispositif de filtration peut être logé.

2. Dispositif de filtration suivant la revendication 1, **caractérisé en ce que** l'entrée (22, 24) respective est disposée dans une partie (26) commune de l'enveloppe (10) de filtre et **en ce que** l'entrée (22, 24) respective a au moins un endroit (28, 30, 32, 34) de raccordement dans la partie (26) de l'enveloppe.

3. Dispositif de filtration suivant la revendication 1 ou 2, **caractérisé en ce que** les deux éléments (12, 14) de filtre parcourus de l'intérieur vers l'extérieur, en étant disposés l'un derrière l'autre coaxialement, ont un espace (20) de filtrat commun.

4. Dispositif de filtration suivant la revendication 2 ou 3, **caractérisé en ce que** l'espace (16) de non filtrat de l'un des éléments (12) de filtre s'étend entre une surface (36) latérale fermée et une matière filtrante de cet élément (12) de filtre, qui du côté du fond est raccordé à une entrée (22) pour un courant d'huile de fuite, qui débouche, par son endroit (38) de raccordement axial, dans un espace (40) de réception de la partie (26) de l'enveloppe, lequel est séparé d'un autre espace (42) de réception de la partie (26) de l'enveloppe, dans lequel débouche l'entrée (24) pour un courant principal d'huile.

5. Dispositif de filtration suivant l'une des revendications 2 à 4, **caractérisé en ce que** l'entrée (24) pour un courant principal d'huile a un endroit (30) de raccordement du côté du fond dans la partie (26) de l'enveloppe, qui est disposé coaxialement aux éléments (12, 14) de filtre et **en ce qu'**il y au moins un endroit (32, 34) de raccordement pour le courant principal d'huile, qui, comme l'endroit (28) de raccordement pour le courant de fuite d'huile, traverse radialement la partie (26) de l'enveloppe.

6. Dispositif de filtration suivant l'une des revendications précédentes, **caractérisé en ce que** les deux éléments (12, 14) de filtre, en particulier après leur usage, peuvent après retrait d'une partie (78) de couvercle de l'enveloppe (10) de filtre, en être retirés en composite d'élément et être remplacés par des éléments de filtre neufs.

7. Dispositif de filtration suivant l'une des revendications précédentes, **caractérisé en ce que** la matière filtrante de l'élément (12, 14) de filtre respectif est entourée d'un tube (60, 62) d'appui perméable au fluide et est enchâssé du côté frontal par au moins une coiffe (44, 66, 68) d'extrémité.

8. Dispositif de filtration suivant la revendication 7, **caractérisé en ce que** la coiffe (44) d'extrémité du côté du fond de l'un des éléments (12) de filtre a, pour le courant principal d'huile, dans au moins un plan, au moins un moyen (70, 72) individuel d'étanchéité en vue de rendre étanche le composite d'éléments vis-à-vis de la partie (26) de l'enveloppe, tout en séparant l'espace (16, 18) respectif de non filtrat de l'espace (20) de filtrat.

9. Dispositif de filtration suivant l'une des revendications 6 à 8, **caractérisé en ce que** la partie (78) de couvercle a une soupape (90) de dérivation et/ou un dispositif magnétique, en particulier sous la forme d'un aimant (92) permanent en forme de barreau.

10. Dispositif de filtration suivant l'une des revendications précédentes comprenant un composite d'éléments de filtre constitué de deux éléments (12, 14) de filtre, qui sont reliés entre eux par une coiffe (66) d'extrémité commune, **caractérisé en ce qu'**une matière filtrante de l'un des éléments (12) de filtre s'étend, en formant un espace (40) de réception, autour d'une enveloppe (36) fermée et **en ce que** cet espace (40) de réception dispose d'endroits (38) de passage dans une autre coiffe (44) d'extrémité du un élément (12) de filtre.

11. Dispositif de filtration suivant la revendication 10, **caractérisé en ce que**, dans une partie du côté du fond de l'élément (12) de filtre ayant l'enveloppe (36) fermée, sont disposés deux moyens (70, 72) d'étanchéité différents l'un de l'autre et ayant un effet d'étanchéité, de manière à ce que les bagues d'étanchéité, qui leur appartiennent, s'étendent concentriquement l'une à l'autre.
